# EUROPÄISCHE PATENTSCHRIFT

(11) **EP 2 574 895 B1**
(45) Veröffentlichungstag und Bekanntmachung des Hinweises auf die Patenterteilung: **31.08.2016**
(21) Anmeldenummer: 11183035.2
(22) Anmeldetag: 28.09.2011
(51) Int. Cl.: G01D 11/30, G01L 19/14, G01L 19/00

(54) **Messanordnung für die Prozessmesstechnik mit einem Universal-Prozessanschluss**
Measuring assembly for process measurement technology with a universal process connection
Agencement de mesure destiné à la technique de mesure de processus et doté d'un raccord de processus universel

(43) Veröffentlichungstag der Anmeldung: 03.04.2013
(73) Patentinhaber: VEGA Grieshaber KG, 77709 Wolfach (DE)
(72) Erfinder: Kopp, Thomas, 77709 Wolfach (DE)
(74) Vertreter: Westphal, Mussgnug & Partner Patentanwälte mbB

(56) Entgegenhaltungen:
- DE-A1- 2 406 508
- DE-A1- 10 226 612

## Beschreibung

Messanordnung für die Prozessmesstechnik mit einem Universal-Prozessanschluss.

Die Erfindung betrifft eine Messanordnung für die Prozessmesstechnik zur Messung einer physikalischen und/oder chemischen Prozessgröße eines sich in einem Behältnis befindenden Prozessmediums gemäß dem Oberbegriff des Patentanspruchs 1.

Eine solche Messanordnung ist bspw. aus der DE 196 28 551 B4 bekannt, die als Messgerät aus einem Prozessanschluss und einem darauf aufgesetzten Sensorgehäuse als Schutz des Sensors und der zugehörigen Elektronik dient. Der Prozessanschluss stellt die Verbindung des Messgerätes mit einem das Prozessmedium führenden Behälter oder einer Rohrleitung bzw. einem Anschlussstutzen eines Tanks her und umfasst in der Regel den Sensor bzw. die Messzelle, bspw. eine Druckmesszelle. Bei dieser bekannten Messanordnung ist zwischen der medienseitigen Stirnfläche der Messzelle und einem stirnseitig umlaufenden Dichtungssteg des Messzellengehäuses ein Dichtungsring vorgesehen. Weiterhin wird ein Montagekonzept vorgeschlagen, bei welchem das Messgerät in einen Flansch eingeschraubt wird, wobei randseitig eine Abdichtung mittels eines Dichtungsringes realisiert wird.

Mit einer solchen bekannten Messanordnung lässt sich das Messgerät an einem das Prozessmedium beinhaltenden Behälter über den Flansch derart befestigen, dass sich das Sensorgehäuse in einem geschützten Bereich befindet. Mit einem solchen Prozessanschluss ist es jedoch nicht möglich, das Messgerät vollständig dem Prozessmedium auszusetzen, da die dem Prozessmedium ausgesetzten Komponenten des Messgerätes, wie Sensorgehäuse und Anschlusskabel in der Regel nicht chemisch resistent gegenüber dem Prozessmedium sind und daher andere Prozessanschlüsse und/oder andere Materialien für diese Komponenten verwendet werden müssen. Dies hat eine nachteilige Kostenfolge, da für jedes Messgerät in Abhängigkeit der Einbausituation des Messgerätes verschiedene Prozessanschlüsse oder Komponenten für die Messgeräte aus unterschiedlichen Materialien vorgehalten werden müssen. Weiterer Stand der Technik ist in den Dokumenten DE 2406508 A1 und DE 10226612 A1 offenbart.

Es ist Aufgabe der vorliegenden Erfindung, eine Messanordnung der eingangs genannten Art zu schaffen, deren Prozessanschluss den Anschluss an das Prozessmedium in unterschiedlichen Einbausituationen ermöglicht.

Diese Aufgabe wird gelöst durch eine Messanordnung mit den Merkmalen des Patentanspruchs 1.

Eine solche Messanordnung für die Prozessmesstechnik zur Messung einer physikalischen und/oder chemischen Prozessgröße eines sich in einem Behälter befindenden Prozessmediums, die ein Messgerät mit einem Prozessanschluss und einem darauf aufgesetzten Sensorgehäuse aufweist, wobei der Prozessanschluss ein Messzellengehäuse mit einer Messzelle umfasst, zeichnet sich erfindungsgemäß dadurch aus, dass - der umlaufende Steg derart ausgebildet ist, dass das Messzellengehäuse zwischen dem Flansch und der Überwurfmutter bevorzugt abdichtend verklemmbar ist.

Bevorzugt kann die Messanordnung derart ausgestaltet sein, dass auf der Umfangsfläche des Messzellengehäuses ein umlaufender Steg vorgesehen ist, welcher die Umfangsfläche in einen ersten und zweiten Umfangsabschnitt teilt,
- sich beidseitig des Steges jeweils eine Dichtungsnut anschließt,
- der Prozessanschluss ferner eine Überwurfmutter mit einem Innengewinde und einem innenliegenden Ringanschlag umfasst, und
- ein rohrförmiger Flansch mit einem ersten und zweiten Ende vorgesehen ist, der zur Realisierung eines ersten und eines zweiten Befestigungskonzeptes des Messgerätes an seinem ersten Ende ein Außengewinde aufweist das mit dem Innengewinde der Überwurfmutter korrespondierend ausgebildet ist und ferner derart ausgebildet ist, dass
   - der Flansch für das erste Montagekonzept mit seinem zweiten Ende mit einer Behälterwand des Behälters verbindbar ist, zur Herstellung einer Verbindung des ersten Endes des Flansches mit dem Messzellengehäuse zum einen dessen erster Umfangsabschnitt zum Einführen in den Flansch bis zum Anliegen dessen stirnseitigen ersten Endes an dem Steg des Messzellengehäuses ausgebildet ist und zum anderen dessen zweiter Umfangsabschnitt derart ausgebildet ist, dass zur Herstellung einer Gewindeverbindung der Überwurfmutter mit dem Außengewinde des Flansches die Überwurfmutter über den zweiten Umfangsabschnitt des Messzellengehäuses aufschiebbar und aufschraubbar ist und dabei ein Anliegen des Steges des Messzellengehäuses sowohl an dem Anschlag der Überwurfmutter als auch an dem stirnseitigen ersten Ende des Flansches bewirkt wird, wobei zur Herstellung der Dichtheit gegenüber dem Prozessmedium wenigstens die Dichtungsnut auf dem ersten Umfangsabschnitt des Messzellengehäuses ein Dichtungselement aufweist, und
   - der Flansch für das zweite Montagekonzept mit seinem zweiten Ende mit einer Umfangswandung eines Schutzrohrs verbindbar ist, zur Herstellung einer Verbindung des ersten Endes des Flansches mit dem Messzellengehäuse zum einen dessen zweiter Umfangsabschnitt zum Einführen in den Flansch bis zum Anliegen dessen stirnseitigen ersten Endes an dem Steg des Messzellengehäuses ausgebildet ist und zum anderen dessen erster Umfangsabschnitt derart ausgebildet ist, dass zur Herstellung einer Gewindeverbindung der Überwurfmutter mit dem Außengewinde des Flansches die Überwurfmutter über den ersten Umfangsabschnitt des Messzellengehäuses aufschiebbar und aufschraubbar ist und dabei ein Anliegen des Steges des Messzellengehäuses sowohl an dem Anschlag der Überwurfmutter als auch an dem stirnseitigen ersten Ende des Flansches bewirkt wird, wobei zur Herstellung der Dichtheit gegenüber dem Prozessmedium wenigstens die Dichtungsnut auf dem zweiten Umfangsabschnitt des Messzellengehäuses ein Dichtungselement aufweist.
Mit einem solchen Prozessanschluss der erfindungsgemäßen Messanordnung lassen sich unterschiedliche Montagekonzepte mit jeweils den gleichen Komponenten des Prozessanschlusses realisieren.

So ermöglicht dieser Universal-Prozessanschluss zum einen die Montage des Messgerätes mittels des Flansches und der Überwurfmutter an der Behälterwand eines das Prozessmedium beinhaltenden Behältnisses, wie bspw. eines Tanks oder eines Rohres. Zum anderen kann das Messgerät direkt in den Behältnisraum eingebaut werden, indem das Messgerät in den Flansch eingeschraubt und die Überwurfmutter von der Sensorseite aus auf den Flansch aufgeschraubt wird, wobei gemäß einer Ausgestaltung der Erfindung zum Schutz des Messgerätes und dessen Anschlusskabels der Flansch mit einem Schutzrohr verlängert wird, so dass im Falle eines chemisch aggressiven Mediums die durch das Schutzrohr geschützten Komponenten, wie das Gehäuse des Messgerätes und dessen Anschlusskabel nicht von einem solchen aggressiven Medium angegriffen werden können und damit gegenüber einem solchen Medium nicht beständig sein müssen.

In einer weiteren Ausgestaltung der Erfindung ist der umlaufende Steg des Messzellengehäuses mit einem rechteckförmigen Querschnitt ausgebildet, wodurch ein guter Formschluss mit der Überwurfmutter in beiden Montagekonzepten erreicht wird.

Weiterhin ist es gemäß einer Weiterbildung der Erfindung vorteilhaft, wenn der zweite Umfangsabschnitt des Messzellengehäuses ein Innengewinde aufweist, mit welchem eine Schraubverbindung mit dem Sensorgehäuse hergestellt werden kann. Dies ermöglicht eine einfache und schnelle Montage des Messzellengehäuses.

Ferner bietet es sich gemäß einer weiteren Ausgestaltung der Erfindung an, zur Herstellung einer Dichtheit der Sensorfläche der Messzelle gegenüber dem Prozessmedium den zweiten Umfangsabschnitt mit einem stirnseitigen Dichtsteg zur Aufnahme eines Dichtungsmittels auszubilden.

Schließlich werden vorzugsweise die Dichtungselemente als O-Ringe ausgebildet.

Die Erfindung wird nachstehend anhand von Ausführungsbeispielen unter Bezugnahme auf die beigefügten Figuren ausführlich beschrieben. Es zeigen:
- Figur 1: eine schematische Schnittdarstellung einer erfindungsgemäßen Messanordnung, welche gemäß eines ersten Montagekonzeptes an einer Behälterwand eines Behälters montiert ist,
- Figur 2: eine schematische Schnittdarstellung einer erfindungsgemäßen Messanordnung, welche gemäß eines zweiten Montagekonzeptes aufgebaut ist, und
- Figur 3: eine Darstellung eines Messzellengehäuses der Messanordnung gemäß Figur 1 und Figur 2 in einer Seitensicht.

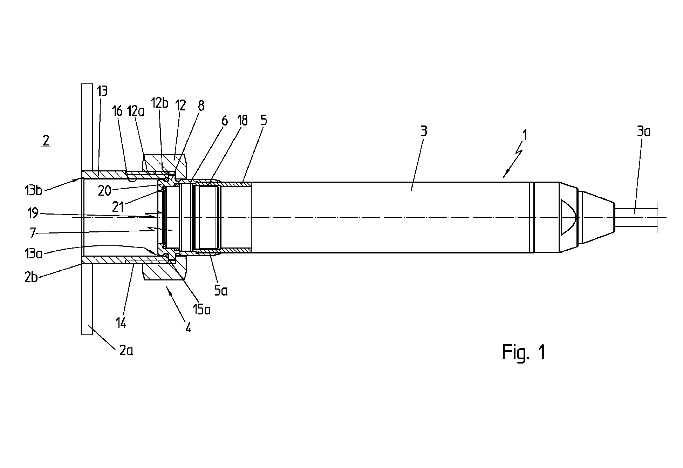

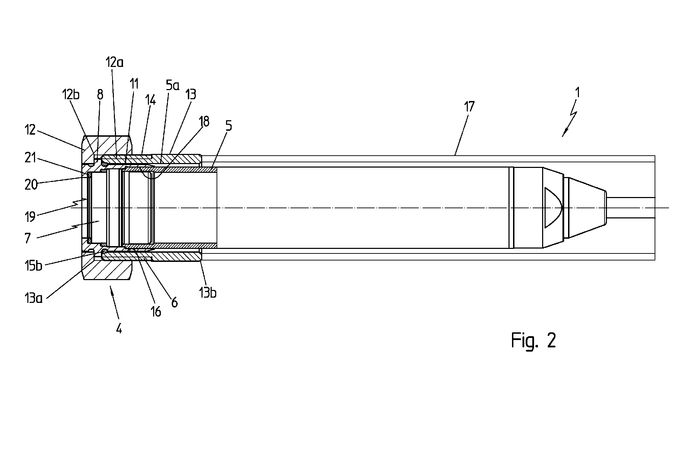

Das in den beiden Figuren 1 und 2 dargestellte Messgerät 3 mit einem Anschlusskabel 3a besteht aus einem Sensorgehäuse 5, welches über eine Gewindeverbindung mit einem eine Messzelle 7 aufnehmenden Messzellengehäuse 6 verbunden ist. Die Gewindeverbindung wird durch ein Außengewinde 5a des Sensorgehäuses 5 und ein hierzu korrespondierendes Innengewinde 18 des Messzellengehäuses 6 hergestellt.

Ein Prozessanschluss 4 umfasst dieses Messzellengehäuse 6 sowie eine Überwurfmutter 12 mit einem Innengewinde 12a und einem innenliegenden Ringanschlag 12b zur Realisierung unterschiedlicher Montagekonzepte für das Messgerät 3, die in den Figuren 1 und 2 dargestellt sind.

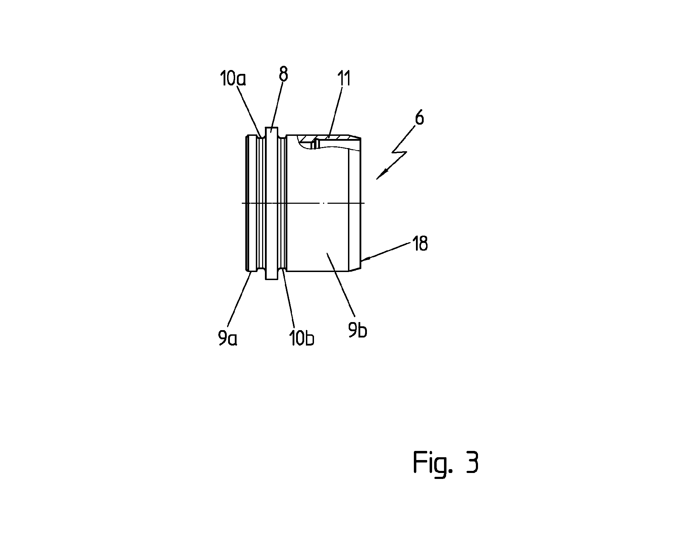

Das in Figur 1 dargestellte erste Montagekonzept realisiert die Montage des Messgerätes 3 an einer Behälterwand 2a eines Behälters 2, wie bspw. eines das Prozessmedium aufnehmenden Treibstoff- oder Wassertanks. Hierzu wird ein als Rohrstutzen oder Einschweißstutzen ausgebildeter Flansch 13 verwendet, der mit einem ersten Ende 13a mit dem Messgerät 3 über den Prozessanschluss 4 verbunden wird, während das zweite Ende 13b des Flansches 13 mit einer Behälteröffnung 2b in der Behälterwand 2a bspw. mittels einer Schweißverbindung verbunden wird, so dass ein Medienkontakt mit der Messzelle 7 zustande kommt. Ferner weist der Flansch 13 an seinem ersten Ende 13a ein Außengewinde 14 auf, welches mit dem Innengewinde 12a der Überwurfmutter 12 korrespondiert. Das rohrförmige Messzellengehäuse 6 weist gemäß Figur 3 auf seiner Umfangsfläche einen umlaufenden Steg 8 auf, der das Messzellengehäuse 6 in einen ersten Umfangsabschnitt 9a und einen zweiten Umfangsabschnitt 9b teilt, wobei beidseitig dieses Steges 8 zur Aufnahme eines Dichtungselementes 15a bzw. 15b jeweils eine Dichtungsnut 10a bzw. 10b sich direkt anschließt.
Der erste Umfangsabschnitt 9a des Messzellengehäuses 6 ist so an das erste Ende 13a des Flansches 13 angepasst, dass es in den Flansch 13 eingesteckt werden kann, bis das stirnseitige erste Ende 13a des Flansches 13 an dem Steg 8 des Messzellengehäuses 6 anliegt. Vor dieser Montage wird in die Dichtungsnut 10a des ersten Umfangsabschnittes 9a ein O-Ring als Dichtungselement 15a eingelegt. Anschließend wird die Überwurfmutter 12 so über das Anschlusskabel 3a und das Sensorgehäuses 5 geschoben, dass die Überwurfmutter 12 mittels dessen Innengewinde 12a auf das Außengewinde 13 des Flansches 13 aufgeschraubt werden kann, bis der Steg 8 des Messzellengehäuses 6 mit einer Stirnfläche an dem Ringanschlag 12b der Überwurfmutter 12 und mit der anderen Stirnfläche an dem stirnseitigen ersten Ende 13a des Flansches 13 anliegt. Dabei ist die Steghöhe des Steges 8 so gewählt, dass dessen Umfangsfläche formschlüssig an einer Innenfläche der Überwurfmutter 12 anliegt und so eine Klemmwirkung zwischen Flansch 13 und Überwurfmutter 12 erreicht werden kann, die den Steg 8 fixiert.
Das Messzellengehäuse 6 sowie die zugehörige Überwurfmutter 12 und der Flansch 13 sind derart aufeinander abgestimmt, dass diese Komponenten auch zur Realisierung des zweiten Montagekonzeptes verwendet werden können.

Mit dem in Figur 2 dargestellten zweiten Montagekonzept wird das Messgerät 3 mittels des Prozessanschlusses 4 in einem Schutzrohr 17 montiert, so dass es sich vollständig in dem Behälterraum befindet, wobei es mittels des Anschlusskabels 3a oder eines entsprechenden Seils außerhalb des Behälters befestigt wird. Sowohl das Messgerät 3 als auch das Anschlusskabel bzw. Seil 3a ist daher gegenüber dem Prozessmedium, insbesondere einem chemisch aggressiven Medium geschützt, so dass für diese Komponenten keine gegenüber solchen Medien resistenten Materialen verwendet werden müssen.

Zur Realisierung dieses zweiten Montagekonzeptes wird das Messzellengehäuse 6 in das erste Ende 13a bis zum Anliegen des Steges 8 an dem stirnseitigen ersten Ende 13a des Flansches 13 eingeführt und mit der Überwurfmutter 12 an dem Flansch 13 verspannt. Vor dem Einschrauben der Überwurfmutter 12 wird wenigstens in die Dichtungsnut 10b auf dem zweiten Umfangsabschnitt 9b des Messzellengehäuses 6 ein O-Ring als Dichtungselement 15b eingelegt.

Der Flansch 13 ist mit seinem zweiten Ende 13b mit dem Schutzrohr 17 verschweißt, sodass eine mediumsdichte Verbindung gegeben ist.

Durch den symmetrischen Aufbau des Messzellengehäuses 6 hinsichtlich des Steges mit den zugehörigen Dichtungsnuten 10a und 10b unterscheiden sich die beiden Montagekonzepte nur durch die Lage der Dichtungselemente 15a und 15b sowie der Aufschraubrichtung der Überwurfmutter 12 bzgl. des Messzellengehäuses 6.

Mit einem solchen Messzellengehäuse 6 und zugehörigen Überwurfmutter 12 und Flansch 13 kann ein Messgerät 3 universell für unterschiedliche Montagekonzepte eingesetzt werden, wobei für den Flansch ein handelsübliches Rohr mit einer Nennweite von 1¼" und eine Überwurfmutter 12 der Größe G 1¼" verwendbar sind. Damit reduzieren sich die für die beschriebenen Montagekonzepte vorzuhaltenden Komponenten, wodurch sich die Herstellkosten als auch die Lagerkosten reduzieren lassen.
- 1: Messanordnung
- 2: Behälter, Tank
- 2a: Behälterwand
- 2b: Behälteröffnung
- 3: Messgerät
- 3a: Anschlusskabel
- 4: Prozessanschluss
- 5: Sensorgehäuse
- 5a: Außengewinde des Sensorgehäuses 5
- 6: Messzellengehäuse
- 7: Messzelle
- 8: Steg auf der Umfangsfläche des Messzellengehäuses
- 9a: erster Umfangsabschnitt des Messzellengehäuses 6
- 9b: zweiter Umfangsabschnitt des Messzellengehäuses 6
- 10a: Dichtungsnut auf dem ersten Umfangsabschnitt 9a
- 10b: Dichtungsnut auf dem zweiten Umfangsabschnitt 9b
- 12: Überwurfmutter
- 12a: Innengewinde der Überwurfmutter 12
- 12b: Ringanschlag der Überwurfmutter 12
- 13: Flansch
- 13a: erstes Ende des Flansches 13
- 13b: zweites Ende des Flansches 13
- 14: Außengewinde des Flansches 13
- 15a: Dichtungselement der Dichtungsnut 10a
- 15b: Dichtungselement der Dichtungsnut 10b
- 16: Innengewinde des Flansches 13
- 17: Schutzrohr
- 18: Innengewinde des Messzellengehäuses 6
- 19: Sensorfläche
- 20: Dichtsteg
- 21: Dichtungselement

## Patentansprüche

1. Messanordnung (1) für die Prozessmesstechnik zur Messung einer physikalischen und/oder chemischen Prozessgröße eines sich in einem Behälter (2) befindenden Prozessmediums, die ein Messgerät (3) mit einem Prozessanschluss (4) und einem darauf aufgesetzten Sensorgehäuse (5) aufweist, wobei der Prozessanschluss (4) ein Messzellengehäuse (6) mit einer Messzelle (7) umfasst,
**dadurch gekennzeichnet, dass**
- auf der Umfangsfläche des Messzellengehäuses (6) ein umlaufender Steg (8) vorgesehen ist, welcher die Umfangsfläche des Messzellengehäuses (6) in einen ersten und zweiten Umfangsabschnitt (9a, 9b) teilt,
- der Prozessanschluss (4) ferner eine Überwurfmutter (12) mit einem Innengewinde (12a) und einem innenliegenden Ringanschlag (12b) umfasst, und
- ein rohrförmiger Flansch (13) mit einem ersten und zweiten Ende (13a, 13b) vorgesehen ist der an seinem ersten Ende (13a) ein Außengewinde (14) aufweist das mit dem Innengewinde (12a) der Überwurfmutter (12) korrespondierend ausgebildet ist, wobei der umlaufende Steg (8) des Messzellengehäuses (6) zwischen dem Flansch (13) und der Überwurfmutter (12) in zwei verschiedenen Montagerichtungen verklemmbar ist, wobei
- für ein erstes Befestigungskonzept zur Herstellung einer Verbindung des ersten Endes (13a) des Flansches (13) mit dem Messzellengehäuse (6) zum einen der erste Umfangsabschnitt (9a) des Messzellengehäuses (6) zum Einführen in den Flansch (13) bis zum Anliegen dessen stirnseitigen ersten Endes (13a) an dem Steg (8) des Messzellengehäuses (6) ausgebildet ist und zum anderen der zweite Umfangsabschnitt (9b) des Messzellengehäuses (6) derart ausgebildet ist, dass zur Herstellung einer Gewindeverbindung der Überwurfmutter (12) mit dem Außengewinde (14) des Flansches (13) die Überwurfmutter (12) über den zweiten Umfangsabschnitt (9b) des Messzellengehäuses (3) aufschiebbar und aufschraubbar ist und dabei ein Anliegen des Steges (8) des Messzellengehäuses (6) sowohl an dem Anschlag (12b) der Überwurfmutter als auch an dem stirnseitigen ersten Ende (13a) des Flansches (13) bewirkt wird, und
- für ein zweites Befestigungskonzept zur Herstellung einer Verbindung des ersten Endes (13a) des Flansches (13) mit dem Messzellengehäuse (6) zum einen der zweite Umfangsabschnitt (9b) des Messzellengehäuses (6) zum Einführen in den Flansch (13) bis zum Anliegen dessen stirnseitigen ersten Endes (13a) an dem Steg (8) des Messzellengehäuses (6) ausgebildet ist und zum anderen der erste Umfangsabschnitt (9a) des Messzellengehäuses (6) derart ausgebildet ist, dass zur Herstellung einer Gewindeverbindung der Überwurfmutter (12) mit dem Außengewinde (14) des Flansches (13) die Überwurfmutter (12) über den ersten Umfangsabschnitt (9a) des Messzellengehäuses (3) aufschiebbar und aufschraubbar ist und dabei ein Anliegen des Steges (8) des Messzellengehäuses (6) sowohl an dem Anschlag (12b) der Überwurfmutter als auch an dem stirnseitigen ersten Ende (13a) des Flansches (13) bewirkt wird.

2. Messanordnung (1) nach Anspruch 1,
**dadurch gekennzeichnet, dass**
- sich beidseitig des Steges (8) jeweils eine Dichtungsnut (10a, 10b) anschließt, wobei
- für das erste Befestigungskonzept zur Herstellung einer Verbindung des ersten Endes (13a) des Flansches (13) mit dem Messzellengehäuse (6) zur Herstellung der Dichtheit gegenüber dem Prozessmedium die Dichtungsnut (10a) auf dem ersten Umfangsabschnitt (9a) des Messzellengehäuses (6) ein Dichtungselement (15a) aufweist, und wobei
- für das zweite Befestigungskonzept zur Herstellung einer Verbindung des ersten Endes (13a) des Flansches (13) mit dem Messzellengehäuse (6) zur Herstellung der Dichtheit gegenüber dem Prozessmedium wenigstens die Dichtungsnut (10a) auf dem zweiten Umfangsabschnitt (9b) des Messzellengehäuses (6) ein Dichtungselement (15a) aufweist.

3. Messanordnung nach Anspruch 1 oder 2,
**dadurch gekennzeichnet, dass** für das zweite Befestigungskonzept ein das Sensorgehäuse (5) aufnehmendes Schutzrohr (17) vorgesehen ist, welches mit dem zweiten Ende (13b) des Flansches (13) formschlüssig verbunden ist.

4. Messanordnung nach Anspruch 1 bis 3,
**dadurch gekennzeichnet, dass** der umlaufende Steg (8) des Messzellengehäuses (6) mit einem rechteckförmigen Querschnitt ausgebildet ist.

5. Messanordnung nach einem der Ansprüche 1 bis 4,
**dadurch gekennzeichnet, dass** der zweite Umfangsabschnitt (9b) des Messzellengehäuses (6) ein Innengewinde (18) aufweist, mit welchem eine Schraubverbindung mit dem Sensorgehäuse (5) hergestellt wird.

6. Messanordnung nach einem der vorhergehenden Ansprüche,
**dadurch gekennzeichnet, dass** zur Herstellung einer Dichtheit einer Sensorfläche (20) der Messzelle (7) gegenüber dem Prozessmedium der erste Umfangsabschnitt (9a) mit einem stirnseitigen Dichtsteg (20) zur Aufnahme eines Dichtungselementes (21) ausgebildet ist.

7. Messanordnung nach einem der vorhergehenden Ansprüche,
**dadurch gekennzeichnet, dass** die Dichtungselemente (15a, 15b, 21) als O-Ringe ausgebildet sind.

## Claims

1. Measuring arrangement (1) for process measuring technology for measuring a physical and/or chemical process variable of a process medium located in a container (2), said measuring arrangement having a measuring device (3) having a process connection (4) and a sensor housing (5) placed thereon, wherein the process connection (4) comprises a measuring cell housing (6) having a measuring cell (7),
**characterised in that**
- a circumferential support (8) is provided on the peripheral surface of the measuring cell housing (6), said support dividing the peripheral surface of the measuring cell housing (6) into a first and second peripheral section (9a, 9b),
- the process connection (4) furthermore comprises a union nut (12) having an internal thread (12a) and an internal annular stop (12b), and
- a tubular flange (13) is provided with a first and second end (13a, 13b), said flange having an external thread (14) on its first end (13a) which is formed correspondingly with the internal thread (12a) of the union nut (12), wherein the circumferential support (8) of the measuring cell housing (6) is able to be clamped between the flange (13) and the union nut (12) in two different mounting directions, wherein
- for a first fastening concept, for the production of a connection of the first end (13a) of the flange (13) to the measuring cell housing (6), on the one hand, the first peripheral section (9a) of the measuring cell housing (6) is formed for insertion into the flange (13) until the front-end first end (13a) thereof comes into contact with the support (8) of the measuring cell housing (6) and, on the other hand, the second peripheral section (9b) of the measuring cell housing (6) is formed in such a way that, for the production of a threaded connection of the union nut (12) to the external thread (14) of the flange (13), the union nut (12) is able to be pushed and unscrewed via the second peripheral section (9b) of the measuring cell housing (3) and the support (8) of the measuring cell housing (6) thereby comes into contact with both the stop (12b) of the union nut and the front-end first end (13a) of the flange (13), and
- for a second fastening concept, for the production of a connection of the first end (13a) of the flange (13) to the measuring cell housing (6), on the one hand, the second peripheral section (9b) of the measuring cell housing (6) is formed for insertion into the flange (13) until the front-end first end (13a) thereof comes into contact with the support (8) of the measuring cell housing (6) and, on the other hand, the first peripheral section (9b) of the measuring cell housing (6) is formed in such a way that, for the production of a threaded connection of the union nut (12) to the external thread (14) of the flange (13), the union nut (12) is able to be pushed and unscrewed via the first peripheral section (9b) of the measuring cell housing (3) and the support (8) of the measuring cell housing (6) thereby comes into contact with both the stop (12b) of the union nut and the front-end first end (13a) of the flange (13).

2. Measuring arrangement (1) according to claim 1,
**characterised in that**
- a seal groove (10a, 10b) is connected respectively on both sides of the support (8), wherein
- for the first fastening concept, for the production of a connection of the first end (13a) of the flange (13) to the measuring cell housing (6), for the production of leak resistance from the process medium, the sealing groove (10a) has a sealing element (15a) on the first peripheral section (9a) of the measuring cell housing (6), and wherein
- for the second fastening concept, for the production of a connection of the first end (13a) of the flange (13) to the measuring cell housing (6), for the production of leak resistance from the process medium, at least the sealing groove (10a) has a sealing element (15a) on the second peripheral section (9b) of the measuring cell housing (6).

3. Measuring arrangement according to claim 1 or 2,
**characterised in that**
for the second fastening concept, a protective tube (17) receiving the sensor housing (5) is provided which is positively connected to the second end (13b) of the flange (13).

4. Measuring arrangement according to claim 1 to 3,
**characterised in that**
the circumferential support (8) of the measuring cell housing (6) is formed with a rectangular cross section.

5. Measuring arrangement according to one of claims 1 to 4,
**characterised in that**
the second peripheral section (9b) of the measuring cell housing (6) has an internal thread (18) with which a screw connection to the sensor housing (5) is produced.

6. Measuring arrangement according to one of the preceding claims,
characterised that that
for the production of leak resistance of a sensor surface (20) of the measuring cell (7) from the process medium, the first peripheral section (9a) is formed with a front-end sealing support (20) for receiving a sealing element (21).

7. Measuring arrangement according to one of the preceding claims,
**characterised in that**
the sealing elements (15a, 15b, 21) are formed as O-rings.

## Revendications

1. Dispositif de mesure (1) destiné à la métrologie de process pour permettre de mesurer une grandeur de process physique et/ou chimique d'un fluide de process renfermé dans un récipient (2) qui comporte un appareil de mesure (3) avec un raccord de process (4) et un boîtier de capteur (5) positionné sur celui-ci, le raccord de process (4) comprenant un boîtier de cellules de mesure (6) avec une cellule de mesure (7),
**caractérisé en ce que**
- sur la surface périphérique du boîtier de cellules de mesure (6) est prévue une rainure périphérique (8) qui subdivise cette surface périphérique du boîtier de cellules de mesure (6) en un premier et un second segments périphériques (9a, 9b),
- le raccord de process (4) comprend en outre un écrou d'accouplement (12) ayant un filetage interne (12a) et une butée annulaire interne (12b), et
- il est prévu une bride tubulaire (13) ayant une première et une seconde extrémités (13a, 13b) qui comporte à sa première extrémité (13a) un filetage externe (14) réalisé de façon à correspondre au filetage interne (12a) de l'écrou d'accouplement (12), la nervure périphérique (8) du boîtier de cellules de mesure (6) pouvant être bloquée entre la bride (13) et l'écrou d'accouplement (12) dans deux directions de montage différentes,
- pour un premier concept de fixation permettant d'obtenir une liaison de la première extrémité (13a) de la bride (13) avec le boîtier de cellules de mesure (6), d'une part, le premier segment périphérique (9a) du boîtier de cellules de mesure (6) est réalisé pour pouvoir être introduit dans la bride (13) jusqu'à l'application de sa première extrémité frontale (13a) contre la nervure (8) du boîtier de cellules de mesure (6), et d'autre part, le second segment périphérique (9b) du boîtier de cellules de mesure (6) est réalisé de sorte que pour obtenir une liaison du filetage de l'écrou d'accouplement (12) avec le filetage externe (14) de la bride (13), l'écrou d'accouplement (12) puisse être glissé et vissé sur le second segment périphérique (9b) du boîtier de cellules de mesure (3) pour obtenir ainsi une application de la nervure (8) du boîtier de cellules de mesure (6) contre la butée (12b) de l'écrou d'accouplement et également contre la première extrémité frontale (13a) de la bride (13), et
- pour un second concept de fixation permettant d'obtenir une liaison de la première extrémité (13a) de la bride (13) avec le boîtier de cellules de mesure (6), d'une part, le second segment périphérique (9b) du boîtier de cellules de mesure (6) est réalisé pour pouvoir être introduit dans la bride (13) jusqu'à l'application de sa première extrémité frontale (13a) contre la nervure (8) du boîtier de cellules de mesure (6), et d'autre part, le premier segment périphérique (9a) du boîtier de cellules de mesure (6) est réalisé de sorte que pour permettre d'obtenir une liaison du filetage de l'écrou d'accouplement (12) avec le filetage externe (14) de la bride (13), l'écrou d'accouplement (12) puisse être glissé et vissé sur le premier segment périphérique (9a) du boîtier de cellules de mesure (3) pour obtenir ainsi une application de la nervure (8) du boîtier de cellules de mesure (6) contre la butée (12b) de l'écrou d'accouplement et également contre la première extrémité frontale (13a) de la bride (13).

2. Dispositif de mesure (1) conforme à la revendication 1,
**caractérisé en ce qu'**
une nervure d'étanchéité respective (10a, 10b) se connecte de part et d'autre de la nervure (8), et
pour le premier concept de fixation permettant d'obtenir une liaison de la première extrémité (13a) de la bride (13) avec le boîtier de cellules de mesure (6), pour obtenir l'étanchéité vis-à-vis du fluide de process, la rainure d'étanchéité (10a) comporte un élément d'étanchéité (15a) sur le premier segment périphérique (9a) du boîtier de cellules de mesure (6), et
- pour le second concept de fixation permettant d'obtenir une liaison de la première extrémité (13a) de la bride (13) avec le boîtier de cellules de mesure (6), pour obtenir l'étanchéité vis-à-vis du fluide de process, au moins la rainure d'étanchéité (10a) comporte un élément d'étanchéité (15a) sur le second segment périphérique (9b) du boîtier de cellules de mesure (6).

3. Dispositif de mesure conforme à la revendication 1 ou 2,
**caractérisé en ce que**
pour le second concept de fixation il est prévu un tube de protection (17) recevant le boîtier de capteur (5) qui est relié par une liaison par la forme avec la seconde extrémité (13b) de la bride (13).

4. Dispositif de mesure conforme à l'une des revendications 1 à 3, **caractérisé en ce que**
la nervure périphérique (8) du boîtier de cellules de mesure (6) a une section rectangulaire.

5. Dispositif de mesure conforme à l'une des revendications 1 à 4, **caractérisé en ce que**
le second segment périphérique (9b) du boîtier de cellules de mesure (6) comporte un filetage interne (18) permettant d'obtenir une liaison vissée avec le boîtier de capteur (5).

6. Dispositif de mesure conforme à l'une des revendications précédentes,
**caractérisé en ce que**
pour obtenir une étanchéité d'une surface de capteur (20) de la cellule de mesure (7) par rapport au fluide de process, le premier segment périphérique (9a) est réalisé avec une nervure d'étanchéité frontale (20) destinée à recevoir un élément d'étanchéité (21).

7. Dispositif de mesure conforme à l'une des revendications précédentes,
**caractérisé en ce que**
les éléments d'étanchéité (15a, 15b, 21) sont réalisés sous la forme de bagues toriques.
